# EUROPÄISCHE PATENTSCHRIFT

(11) **EP 3 425 123 B1**
(45) Veröffentlichungstag und Bekanntmachung des Hinweises auf die Patenterteilung: **01.09.2021**
(21) Anmeldenummer: 17180068.3
(22) Anmeldetag: 06.07.2017
(51) Int. Cl.: F16L 3/01, E02F 9/20, E02D 17/13, E02F 9/22, E02F 3/413, E02F 3/47, B65H 75/42

(54) **AUSLEGER FÜR EINE BAUMASCHINE**
BOOM FOR A CONSTRUCTION MACHINE
CONSOLE D'UN ENGIN

(43) Veröffentlichungstag der Anmeldung: 09.01.2019
(73) Patentinhaber: BAUER Maschinen GmbH, 86529 Schrobenhausen (DE)
(72) Erfinder: SEDLMEIER, Johannes, 85305 Jetzendorf (DE)
(74) Vertreter: Wunderlich & Heim Patentanwälte Partnerschaftsgesellschaft mbB

(56) Entgegenhaltungen:
- FR-A1- 2 730 750
- JP-A- 2002 046 092
- US-A- 3 479 077
- US-A1- 2015 003 950

## Beschreibung

Die Erfindung betrifft einen Ausleger für eine Baumaschine, mit einem Auslegerarm, welcher an seinem unteren Ende an einem Trägergerät anbringbar ist und an seinem oberen Ende eine Aufhängeeinrichtung für ein Arbeitsgerät aufweist, wobei an dem Auslegerarm mindestens eine Schlauchtrommel für eine Schlauchleitung drehbar gelagert ist, gemäß dem Oberbegriff des Anspruchs 1.

Ein gattungsbildender Auslegerarm geht aus der US-A1-2015/0003950 hervor. Durch einen kastenartigen Auslegerarm einer Bergbaumaschine erstreckt sich eine Gelenkachse für zwei Querträger einer Baggerschaufel. Unterhalb der Gelenkwelle in einem Hohlraum des Auslegerarms ist eine Schlauchtrommel gelagert. Der Schlauch tritt an einer Vorderseite des Auslegerarms aus.

Bei einem Ausleger handelt es sich um einen Tragarm oder Mast, welcher vorzugsweise um eine horizontale Schwenkachse verschwenkbar an einem Trägergerät gelagert ist. Ein derartiger Ausleger für eine Aushubvorrichtung ist beispielsweise aus der EP 2 801 668 A1 bekannt. Bei dieser Aushubeinrichtung ist ein Schlitzwandgreifer oder eine Schlitzwandfräse verstellbar an einem mastartigen Ausleger über ein Hauptseil angehängt. Zur Zuführung von Hydraulikfluid und/oder zum Zu- oder Abführen einer Suspension in den Boden ist am Ausleger eine Schlauchtrommel für eine entsprechende Schlauchleitung angebracht. Die Schlauchtrommel kann dabei einen Durchmesser von einigen Metern aufweisen. Aus Platzgründen ist die Schlauchtrommel seitlich versetzt und in bestimmten Fällen auch mit einer gewissen Schrägstellung am Mast angeordnet. Aufgrund dieser versetzten Anordnung der Schlauchtrommel ist eine mittige Zuführung an das jeweilige Arbeitsgerät problematisch. Bei einer außermittigen Zuführung können jedoch über die Schlauchleitung Querkräfte auf das Arbeitsgerät aufgebracht werden, was sich etwa bei der Erstellung von Frässchlitzen in unerwünschten Abweichungen von einer vorgegebenen Fräsrichtung auswirken kann.

Aus der US-A-3479077 geht eine Baumaschine mit einem gitterartigen Auslegerarm hervor. An einem oberen Bereich des Auslegerarms ist eine Schlauchtrommel gelagert.

Aus der EP 0 518 292 A1 ist ein schienengeführter Wagen mit einem starren Ausleger bekannt, an dem eine Schlitzwandfräse aufgehängt werden kann. Bei dieser Anordnung, welche insbesondere für den Einsatz in Tunneln oder in Gebäuden mit einem beschränkten Höhenbereich vorgesehen ist, ist die Schlauchtrommel horizontal an der Oberseite des schienengeführten Wagens drehbar gelagert. Bei einer derartigen horizontalen Lagerung ergibt sich grundsätzlich ein schräg gerichteter Einlauf der Schlauchrolle in eine Vertikalrichtung nach unten zum Arbeitsgerät.

Der Erfindung liegt die **Aufgabe** zugrunde, einen Ausleger für eine Baumaschine anzugeben, bei welchem eine möglichst effiziente Zuführung einer Schlauchleitung von einer Schlauchtrommel ermöglicht ist.

Nach der Erfindung wird die Aufgabe durch einen Ausleger mit den Merkmalen des Anspruchs 1 gelöst. Bevorzugte Ausführungsformen der Erfindung sind in den abhängigen Ansprüchen angegeben.

Der erfindungsgemäße Ausleger für eine Baumaschine ist unter anderem dadurch gekennzeichnet, dass der Auslegerarm in einem Bereich entlang einer Längsachse einen Freiraum aufweist, in welchem mindestens eine Schlauchtrommel angeordnet ist.

Eine Grundidee der Erfindung besteht darin, einen länglichen Auslegerarm so auszubilden, dass eine Schlauchtrommel im Wesentlichen längs zur Längsachse des Auslegerarms gelagert werden kann. Dabei kann sich die Schlauchleitung von der Schlauchtrommel zur Aufhängeeinrichtung am oberen Ende des Auslegerarms entlang der Längsachse, vorzugsweise parallel hierzu, erstrecken. Gegenüber einer seitlichen Anbringung der Schlauchtrommel kann so die Schlauchleitung nahezu querkraftfrei zur oberen Aufhängeeinrichtung geleitet und dann zu dem Arbeitsgerät weitergeführt werden. Durch diese Anordnung sind auch kaum oder gar keine quer gerichteten Umlenkrollen für die Schlauchleitung notwendig, um diese zur Längsachse auszurichten.

Gemäß einem weiteren Aspekt der Erfindung ist am Auslegerarm ein Freiraum zum Aufnehmen der Schlauchtrommel im Bereich der Längsachse des mastartigen Auslegers ausgebildet. Die mindestens eine Schlauchtrommel ist dabei in dem Freiraum so gelagert, dass eine Drehachse der Schlauchtrommel quer gerichtet oder orthogonal zur Längsachse des Auslegerarms ausgerichtet ist. So kann eine Schlauchleitung von der Schlauchtrommel in einer Auslegermittenebene abgerollt werden, welche durch die Längsachse des Auslegerarms und Vertikale, welche üblicherweise die Arbeits- oder Bewegungsrichtung des Arbeitsgeräts ist, aufgespannt ist. Die Drehachse der Schlauchtrommel steht vorzugsweise senkrecht zu dieser Auslegermittenebene.

Nach der Erfindung ist vorgesehen, dass der Freiraum von zwei Seitenwänden begrenzt ist. In dem Auslegerarm wird sozusagen ein Auge als Freiraum gebildet, in welchem die Schlauchtrommel aufgenommen werden kann. Die Drehachse der Schlauchtrommel erstreckt sich dabei zwischen den beiden Seitenwänden. Trotz des Vorsehens eines Freiraums in der Mitte des Auslegerarms wird bei dieser Ausgestaltung mit zwei gegenüberliegenden Seitenwänden weiterhin eine sehr stabile Auslegeranordnung erreicht. Die Seitenwände sind vorzugsweise symmetrisch, insbesondere zur Auslegermittenebene.

Es ist eine gabelartige Anordnung des Freiraums vorgesehen, wobei der sich im Wesentlichen vertikal erstreckende Auslegerarm an seiner Ober- oder Unterseite offen ist. Nach der Erfindung ist der Freiraum in axialer Richtung von einem unteren Auslegerarmbereich und einem oberen Auslegerarmbereich begrenzt. Die mindestens eine Seitenwand kann gegenüber dem unteren Auslegerarmbereich und dem oberen Auslegerarmbereich seitlich vorstehen. Das seitliche Vorstehen kann sich sowohl auf die Seitenrichtung entsprechend der Richtung der Drehachse der Schlauchtrommel oder senkrecht hierzu beziehen.

Grundsätzlich kann die Schlauchtrommel an einer oder an beiden angrenzenden Seiten des Auslegerarms frei drehbar gelagert sein.

Besonders bevorzugt ist es nach einer Variante der Erfindung, dass an mindestens einer Seitenwand ein Drehantrieb zum drehenden Antreiben der Schlauchtrommel angebracht ist. Insbesondere beim Aufwickeln der Schlauchleitung kann so die Aufnahme der Schlauchleitung auf der Schlauchtrommel unterstützt werden.

Vorteilhaft ist es weiterhin, dass an mindestens einer Seitenwand ein Leitungsanschluss angeordnet ist, welcher zum Zuführen eines Fluides zu einem Schlauch auf der Schlauchtrommel ausgebildet ist. Der Leitungsanschluss an einer Seitenwand des Auslegerarms ist dabei vorzugsweise mit einer Zuführungsleitung verbunden, welche mit einer Pumpe am Trägergerät oder am Boden in Verbindung steht. Über den Leitungsanschluss an der Seitenwand des Auslegerarms kann das Fluid vorzugsweise über die Nabe der Schlauchtrommel mit der Schlauchleitung auf der Schlauchtrommel verbunden sein. Hiermit wird eine effiziente Fluidzuführung ermöglicht.

Weiter ist es nach einer Ausführungsform der Erfindung vorgesehen, dass die mindestens eine Schlauchtrommel gegenüber der Vorderseite und der Rückseite des Auslegerarms vorsteht. Abhängig von der jeweils vorzusehenden Maschine kann ein gewisser Versatz der Schlauchtrommel zur Auslegermittenebene vorgesehen sein. Vorzugsweise ragt die Schlauchtrommel gegenüber dem Auslegerarm zur Rückseite weiter vor als zur Vorderseite. Dabei ist das Arbeitsgerät an der Vorderseite des Auslegerarms angeordnet, während die Rückseite zum Trägergerät hin gerichtet ist.

Die Aufhängeeinrichtung am oberen Ende des Auslegerarms kann grundsätzlich beliebig ausgebildet sein, soweit sie zur Aufhängung eines Arbeitsgerätes am Auslegerarm und zur Zuführung einer Schlauchleitung geeignet ist. Besonders bevorzugt ist es dabei, dass die Aufhängeeinrichtung einen Mastkopf mit mindestens einer Umlenkrolle für mindestens eine Schlauchleitung umfasst. Sind mehrere Schlauchleitungen vorgesehen, so können eine oder mehrere Umlenkrollen für jede Schlauchleitung angeordnet sein.

Vorzugsweise weisen die Rollenachsen der Umlenkrollen eine Richtung auf, welche parallel zur Drehrichtung der Schlauchtrommel ist. Besonders bevorzugt ist es nach einer Ausführungsvariante der Erfindung, dass die mindestens eine Umlenkrolle in einen Mittenbereich an der Längsachse des Auslegerarms angeordnet ist. Auf diese Weise kann eine Zuführung der Schlauchleitung möglichst in der Auslegermittenebene des Auslegerarms erfolgen.

Die Erfindung umfasst weiterhin eine Baumaschine mit einem Trägergerät, an welchem der zuvor beschriebene Ausleger angeordnet ist.

Besonders vorteilhaft ist es dabei, dass der Ausleger schwenkbar um eine horizontale Schwenkachse an dem Trägergerät gelagert ist. Der Ausleger befindet sich in normaler Betriebsposition in einer im Wesentlichen vertikalen Anordnung und kann um die Schwenkachse in einem vorgegebenen Schwenkbereich im Betrieb verstellt werden. Der Schwenkbereich kann dabei bis zu 45° oder mehr gegenüber der Vertikalen betragen.

Eine weitere bevorzugte Ausführungsform der Erfindung besteht darin, dass die Baumaschine eine Tiefbaumaschine ist, bei welcher das Arbeitsgerät als ein Schlitzwandgreifer oder eine Schlitzwandfräse ausgebildet ist. Diese Arbeitsgeräte dienen zur Erstellung eines Schlitzes im Boden, welcher insbesondere zum Herstellen einer Schlitz- oder Dichtwand benötigt wird. Schlitzwandgreifer und Schlitzwandfräsen weisen verschiedene hydraulische Aggregate auf, welche über eine Hydraulik-Schlauchleitung mit entsprechender Hydraulikenergie versorgt werden müssen. Bei einer Schlitzwandfräse kann zudem eine weitere Schlauchleitung zum Zuführen einer Stütz- oder Abbindesuspension in den gefrästen Schlitz oder zum Absaugen von Fräsklein vorgesehen sein. Für all diese Schlauchleitungen kann mindestens eine Schlauchtrommel gemäß der Erfindung vorgesehen sein.

Die Erfindung wird nachfolgend anhand von bevorzugten Ausführungsbeispielen weiter erläutert, welche schematisch in den Zeichnungen dargestellt sind. In den Zeichnungen zeigen:
- Fig. 1: eine perspektivische Ansicht einer erfindungsgemäßen Baumaschine;
- Fig. 2: eine vergrößerte perspektivische Ansicht eines erfindungsgemäßen Auslegers der Baumaschine von Fig. 1;
- Fig. 3: eine Seitenansicht des Auslegers von Fig. 2; und
- Fig. 4: eine perspektivische Ansicht eines weiteren erfindungsgemäßen Auslegers.

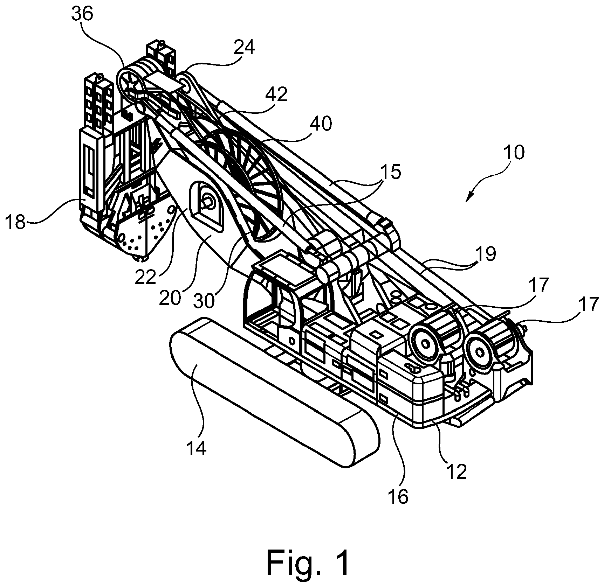

Eine erfindungsgemäße Baumaschine 10 gemäß Fig. 1 weist ein Trägergerät 12 auf, welches ein Fahrwerk 14 mit Raupenfahrschiffen umfasst. Auf dem Fahrwerk 14 ist drehbar ein Oberwagen 16 gelagert. An einer Vorderseite des Oberwagens 16 des Trägergeräts 12 ist ein Ausleger 20 mit einem balkenförmigen Auslegerarm 22 schwenkbar um eine horizontale Schwenkachse angelenkt. An einem oberen Ende des Auslegerarms 22 ist eine Aufhängeeinrichtung 24 mit einer Umlenkrolle 36 angeordnet, über welche ein Arbeitsgerät 18 vertikal nach unten hängend angeordnet ist. Im dargestellten Ausführungsbeispiel ist das Arbeitsgerät 18 als ein Schlitzwandgreifer mit Greiferschaufel zum Greifern eines Schlitzes im Boden ausgebildet. Mittels Winden 17 kann das Arbeitsgerät 18 relativ zum Ausleger 20 mittels Seilen 19 vertikal bewegt werden. Die Seile 19 sind dabei über die Umlenkrolle 36 am Auslegerarm 22 geführt. Der Ausleger 20 kann mittels Stellzylindern 15 gegenüber dem Oberwagen um eine horizontale Schwenkachse verschwenkt werden.

In einem Mittenbereich des Auslegerarms 22 ist in einem Freiraum 30 eine Schlauchtrommel 40 drehbar um eine horizontale Drehachse gelagert. Auf der Schlauchtrommel 40 sind Schlauchleitungen 42 aufgerollt, welche sich von der Schlauchtrommel 40 über die Umlenkrolle 36 zum Arbeitsgerät 18 erstreckt. Über die Schlauchleitungen 42 kann Hydraulikfluid vom Trägergerät 12 zum Arbeitsgerät 18 zu- und wieder rückgeführt werden.

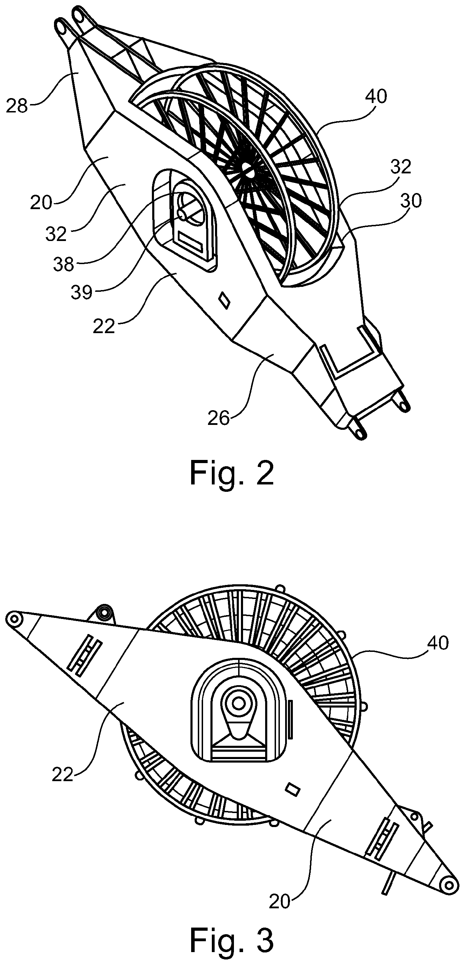

Der Ausleger 20 ist in den Figuren 2 und 3 näher dargestellt. Der Ausleger 20 besteht dabei im Wesentlichen aus einem balkenförmigen Auslegerarm 22. An einem unteren Auslegerarmbereich 26 sind Schwenkgelenke zur Anbindung an das Trägergerät 12 vorgesehen. An einem oberen Auslegerarmbereich 28 ist eine Halterung für die Aufhängeeinrichtung 24 angeordnet. In einem Mittenbereich ist der Freiraum 30 zur Aufnahme der Schlauchtrommel 40 ausgebildet. In diesem Mittenbereich ist der Auslegerarm 22 verbreitert, wobei die beiden Seitenwände 32 seitlich gegenüber dem unteren Auslegerarmbereich 26 und dem oberen Auslegerarmbereich 28 vorstehen.

In einer Ausnehmung in einer der Seitenwände 32 ist ein Drehantrieb 38 zum drehenden Antreiben der Schlauchtrommel 40 untergebracht. In diesem Bereich befindet sich auch ein Schlauchanschluss 39, über welchen Hydraulikfluid über die Nabe der Schlauchtrommel 40 zur Schlauchleitung 42 geleitet werden kann.

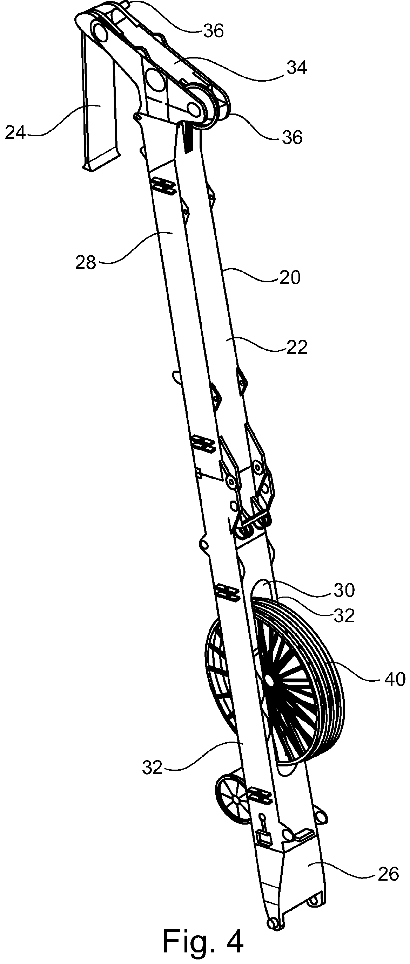

In Fig. 4 ist ein weiterer erfindungsgemäßer Ausleger 20 mit einem mastartigen Auslegerarm 22 dargestellt. Dieser Auslegerarm 22 weist ebenfalls einen unteren Auslegerarmbereich 26 mit einem Schwenkgelenk zum schwenkbaren Anbringen an einem Trägergerät 12 auf. Am oberen Ende des oberen Auslegerarmbereichs 28 ist ein Mastkopf 34 mit Umlenkrollen 36 ausgebildet. Hieran kann über nicht dargestellte Hauptseile ein Arbeitsgerät 18 mittels einer Aufhängeeinrichtung 24 vertikal verstellbar aufgehängt werden.

Zur möglichst querkraftfreien Zuführung einer Schlauchleitung entlang des mastartigen Auslegerarmes 22 zu dem Arbeitsgerät ist in einem unteren Mittenbereich des Auslegerarmes 22 ein schlitzartiger, durchgehender Freiraum 30 ausgebildet, in welchem drehbar eine Schlauchtrommel 40 zu beiden Seiten in Seitenwänden 32 gelagert ist. Die Schlauchtrommel 40 ragt zu beiden Seiten, nämlich der Vorderseite und der Rückseite des Auslegerarms 22, aus dem Freiraum 30 hervor. Von der Schlauchtrommel 40 kann eine nicht dargestellte Schlauchleitung längs des Auslegerarms 22 über den Mastkopf 34 mit den Umlenkrollen 36 bis zu dem aufgehängten, nicht dargestellten Arbeitsgerät weitgehend querkraftfrei geführt werden.

## Patentansprüche

1. Ausleger für eine Baumaschine (10), mit einem Auslegerarm (22), welcher an seinem unteren Ende mit einem unteren Auslegerarmbereich (26) an einem Trägergerät (12) anbringbar ist und an seinem oberen Ende an einem oberen Auslegerarmbereich (28) eine Aufhängeeinrichtung (24) für ein Arbeitsgerät (18) aufweist, wobei an dem Auslegerarm (22) an einem Mittenbereich, welcher zwischen dem unteren Auslegerarmbereich (26) und dem oberen Auslegerarmbereich (28) angeordnet ist, mindestens eine Schlauchtrommel (40) für eine Schlauchleitung (42) drehbar gelagert ist,
**dadurch gekennzeichnet,**
**dass** an dem Mittenbereich des Auslegerarms (22) eine gabelartige Anordnung zum Bilden eines Freiraums (30) vorgesehen ist, welcher zum Aufnehmen der mindestens einen Schlauchtrommel (40) entlang einer Längsachse des Auslegerarms (22) ausgebildet und durch zwei gegenüberliegende Seitenwände (32) des Auslegerarms (22) begrenzt ist, an welchen die mindestens eine Schlauchtrommel (40) drehbar gelagert ist, wobei die mindestens eine Schlauchtrommel (40) gegenüber einer zum Arbeitsgerät (18) gerichteten Vorderseite und einer zum Trägergerät (12) gerichteten Rückseite des Auslegerarms (22) aus dem Freiraum (30) vorragt.

2. Ausleger nach Anspruch 1,
**dadurch gekennzeichnet,**
**dass** sich eine Drehachse der Schlauchtrommel (40) zwischen den zwei Seitenwänden (32) erstreckt.

3. Ausleger nach Anspruch 2,
**dadurch gekennzeichnet,**
**dass** die zwei Seitenwände (32) symmetrisch ausgebildet sind.

4. Ausleger nach einem der Ansprüche 1 bis 3,
**dadurch gekennzeichnet,**
**dass** die mindestens eine Seitenwand (32) gegenüber dem unteren Auslegerarmbereich (26) und dem oberen Auslegerarmbereich (28) seitlich vorsteht.

5. Ausleger nach einem der Ansprüche 1 bis 4,
**dadurch gekennzeichnet,**
**dass** an mindestens einer Seitenwand (32) ein Drehantrieb zum drehenden Antreiben der Schlauchtrommel (40) angebracht ist.

6. Ausleger nach einem der Ansprüche 1 bis 5,
**dadurch gekennzeichnet,**
**dass** an mindestens einer Seitenwand (32) ein Leitungsanschluss angeordnet ist, welcher zum Zuführen eines Fluides zu einem Schlauch auf der Schlauchtrommel (40) ausgebildet ist.

7. Ausleger nach einem der Ansprüche 1 bis 6,
**dadurch gekennzeichnet,**
**dass** eine Schlauchleitung (42) der Schlauchtrommel (40) in einer Auslegermittenebene abrollbar ist, welche durch die Längsachse des Auslegerarms (22) und eine Vertikale aufgespannt ist.

8. Ausleger nach einem der Ansprüche 1 bis 7,
**dadurch gekennzeichnet,**
**dass** die Aufhängeeinrichtung (24) einen Mastkopf (34) mit mindestens einer Umlenkrolle (36) für mindestens eine Schlauchleitung (42) umfasst.

9. Ausleger nach Anspruch 8,
**dadurch gekennzeichnet,**
**dass** die mindestens eine Umlenkrolle (36) in einem mittleren Bereich an der Längsachse des Auslegerarms (22) angeordnet ist.

10. Baumaschine mit einem Trägergerät (12), an dem ein Ausleger (20) nach einem der Ansprüche 1 bis 9 angeordnet ist.

11. Baumaschine nach Anspruch 10,
**dadurch gekennzeichnet,**
**dass** der Ausleger (20) schwenkbar um eine horizontale Schwenkachse an dem Trägergerät (12) gelagert ist.

12. Baumaschine nach Anspruch 10 oder 11,
**dadurch gekennzeichnet,**
**dass** diese eine Tiefbaumaschine ist, bei welcher das Arbeitsgerät (18) als ein Schlitzwandgreifer oder eine Schlitzwandfräse ausgebildet ist.

## Claims

1. Boom for a construction machine (10), with a boom arm (22) which can be mounted at its lower end with a lower boom arm region (26) on a carrier implement (12) and has at its upper end in an upper boom arm region (28) a suspension means (24) for a working apparatus (18),
wherein on the boom arm (22) in a center region arranged between the lower boom arm region (26) and the upper boom arm region (28) at least one hose drum (40) for a hose line (42) is rotatably supported,
**characterized in that**
in the center region of the boom arm (22) a fork-like arrangement for forming a free space (30) is provided which is designed for receiving the at least one hose drum (40) along a longitudinal axis of the boom arm (22) and is delimited by two opposite side walls (32) of the boom arm (22), on which the at least one hose drum (40) is rotatably supported, wherein the at least one hose drum (40) projects from the free space (30) with respect to a front side directed towards the working apparatus (18) and a rear side of the boom arm (22) directed towards the carrier implement (12).

2. Boom according to claim 1,
**characterized in that**
an axis of rotation of the hose drum (40) extends between the two side walls (32).

3. Boom according to claim 2,
**characterized in that**
the two side walls (32) are designed symmetrically.

4. Boom according to any one of claims 1 to 3,
**characterized in that**
the at least one side wall (32) protrudes laterally with respect to the lower boom arm region (26) and the upper boom arm region (28).

5. Boom according to any one of claims 1 to 4,
**characterized in that**
on at least one side wall (32) a rotary drive is mounted for rotationally driving the hose drum (40).

6. Boom according to any one of claims 1 to 5,
**characterized in that**
on at least one side wall (32) a line attachment is arranged which is designed for feeding a fluid to a hose on the hose drum (40).

7. Boom according to any one of claims 1 to 6,
**characterized in that**
a hose line (42) of the hose drum (40) can be unwound in a boom center plane which is spanned by the longitudinal axis of the boom arm (22) and a vertical.

8. Boom according to any one of claims 1 to 7,
**characterized in that**
the suspension means (24) comprises a mast head (34) with at least one deflection roller (36) for at least one hose line (42).

9. Boom according to claim 8,
**characterized in that**
the at least one deflection roller (36) is arranged in a central region on the longitudinal axis of the boom arm (22).

10. Construction machine with a carrier implement (12), on which a boom (20) according to any one of claims 1 to 9 is arranged.

11. Construction machine according to claim 10,
**characterized in that**
the boom (20) is pivotably supported about a horizontal pivot axis on the carrier implement (12).

12. Construction machine according to claim 10 or 11 ,
**characterized in that**
this is a foundation engineering machine, in which the working apparatus (18) is designed as a diaphragm wall grab or a diaphragm wall cutter.

## Revendications

1. Flèche pour un engin de construction (10), avec un bras de flèche (22), lequel peut être installé au niveau de son extrémité inférieure sur un appareil de support (12) au moyen d'une zone de bras de flèche inférieure (26) et présente au niveau de son extrémité supérieure sur une zone de bras de flèche supérieure (28) un dispositif de suspension (24) pour un appareil de travail (18), dans laquelle au moins un tambour de tuyau flexible (40) pour un conduit en tuyau flexible (42) est monté sur le bras de flèche (22) au niveau d'une zone centrale, laquelle est disposée entre la zone de bras de flèche inférieure (26) et la zone de bras de flèche supérieure (28), de manière à pouvoir tourner,
**caractérisée en ce**
**qu'**est prévu, au niveau de la zone centrale du bras de flèche (22), un ensemble de type fourche pour former un espace libre (30), lequel est réalisé pour recevoir l'au moins un tambour de tuyau flexible (40) le long d'un axe longitudinal du bras de flèche (22) et est délimité par deux parois latérales (32) du bras de flèche (22) se faisant face, sur lequel l'au moins un tambour de tuyau flexible (40) est monté de manière à pouvoir tourner, dans lequel l'au moins un tambour de tuyau flexible (40) dépasse de l'espace libre (30) par rapport à un côté avant dirigé vers l'appareil de travail (18) et à un côté arrière, dirigé vers l'appareil de support (12), du bras de flèche (22).

2. Flèche selon la revendication 1,
**caractérisée en ce**
**qu'**un axe de rotation du tambour de tuyau flexible (40) s'étend entre les deux parois latérales (32).

3. Flèche selon la revendication 2,
**caractérisée en ce**
**que** les deux parois latérales (32) sont réalisées de manière symétrique.

4. Flèche selon l'une quelconque des revendications 1 à 3,
**caractérisée en ce**
**que** l'au moins une paroi latérale (32) fait saillie latéralement par rapport à la zone de bras de flèche inférieure (26) et à la zone de bras de flèche supérieure (28).

5. Flèche selon l'une quelconque des revendications 1 à 4,
**caractérisée en ce**
**qu'**un entraînement en rotation pour entraîner en rotation le tambour de tuyau flexible (40) est installé sur au moins une paroi latérale (32).

6. Flèche selon l'une quelconque des revendications 1 à 5,
**caractérisé en ce**
**qu'**est disposé sur au moins une paroi latérale (32) un raccord de conduit, lequel est réalisé pour amener un fluide à un tuyau flexible sur le tambour de tuyau flexible (40).

7. Flèche selon l'une quelconque des revendications 1 à 6,
**caractérisée en ce**
**qu'**un conduit en tuyau flexible (42) du tambour de tuyau flexible (40) peut être déroulé dans un plan central de flèche, lequel est formé par l'axe longitudinal du bras de flèche (22) et une verticale.

8. Flèche selon l'une quelconque des revendications 1 à 7,
**caractérisée en ce**
**que** le dispositif de suspension (24) comprend une tête de mât (34) avec au moins un galet de renvoi (36) pour au moins un conduit en tuyau flexible (42).

9. Flèche selon la revendication 8,
**caractérisée en ce**
**que** l'au moins un galet de renvoi (36) est disposé dans une zone centrale sur l'axe longitudinal du bras de flèche (22).

10. Engin de construction avec un appareil de support (12), sur lequel une flèche (20) selon l'une quelconque des revendications 1 à 9 est disposée.

11. Engin de construction selon la revendication 10,
**caractérisé en ce**
**que** la flèche (20) est montée de manière à pouvoir pivoter autour d'un axe de pivotement horizontal sur l'appareil de support (12).

12. Engin de construction selon la revendication 10 ou 11,
**caractérisé en ce**
**que** celui-ci est un engin de génie civil, dans lequel l'appareil de travail (18) est réalisé en tant qu'un grappin de rideau souterrain ou une fraise de rideau souterrain.
